# EUROPEAN PATENT APPLICATION

(11) **EP 4 345 285 A1**
(43) Date of publication of application: **03.04.2024**
(21) Application number: 22199011.2
(22) Date of filing: 30.09.2022
(51) Int. Cl.: F03D 1/06

(54) **CORE-LAYER BODY, CONNECTING MEMBER, WIND TURBINE BLADE AND METHOD**

(71) Applicant: Siemens Gamesa Renewable Energy A/S, 7330 Brande (DK)
(72) Inventor: Russek, Simon Vestphael, 9270 Klarup (DK)
(74) Representative: SGRE-Association

(57) **Abstract**

The invention relates to a core-layer body (10) for a connecting member (100) for a wind turbine blade (200). The core-layer body (10) comprises in at least one shrinkage section (20a, 20b) of the core-layer body (10) a plurality of grooves (22), wherein the grooves (22) are arranged and configured from a first plate side (11) of the core-layer body (10) in a direction toward a second plate side (12). Furthermore, the core-layer body (10) comprises in at least one holding section (30a, 30b, 30c) different from the at least one shrinkage section (20a, 20b) a plurality of grooves (32), wherein the grooves (32) are arranged and configured from the second plate side (12) of the core-layer body (10) in a direction towards the first plate side (11).

## Description

The present invention relates to a core-layer body, a connecting member, a wind turbine blade as well as a method.

One way to produce more power using a wind turbine under given wind conditions is to increase the size of the blades. However, the manufacture of wind turbine blades and their transportation to wind harvesting sites is becoming increasingly difficult for increasing blade sizes. Therefore, wind turbine blades are, for example, manufactured section-wise and joined on-site. It is desirable to keep the number of processing steps necessary for joining the blade sections as small as possible. Furthermore, the joints have to be configured sufficiently strong to withstand the forces acting on the blade during operation of the wind turbine.

It is the problem of the present invention to at least partially solve the above-described disadvantages. In particular, it is the problem of the present invention to provide a core-layer body for a connecting member or a connecting member by means of which a first part of a wind turbine blade can be connected to a second part of the wind turbine blade along an extension direction of the wind turbine blade in a particularly simple and/or inexpensive manner. Further, it is a problem of the present invention to provide a particularly simple method for connecting a first part of a wind turbine blade along an extension direction of the wind turbine blade to a second part of the wind turbine blade. Furthermore, it is a problem of the invention to provide a particularly stable wind turbine blade.

The above problem is solved by a core-layer body having the features of claim 1 and a connecting member having the features of claim 8 and a wind turbine blade having the features of claim 9 and a method having the features of claim 10. Further features and details of the invention result from the sub-claims, the description and the drawings. Features and details described in connection with the core-layer body according to the invention naturally also apply in connection with the connecting member according to the invention and/or the wind turbine blade and/or the method and vice versa in each case, so that reference is or can always be made mutually with respect to the disclosure of the individual aspects of the invention.

According to a first aspect, the present invention discloses a core-layer body for a connecting member for connecting a first part of a wind turbine blade along an extension direction of the wind turbine blade to a second part of the wind turbine blade. The core-layer body comprises in at least one shrinkage section of the core-layer body a plurality of grooves, wherein the grooves are arranged and configured from a first plate side of the core-layer body in a direction toward a second plate side different from the first plate side such that the core-layer body is bendable in a first bending direction. Furthermore, the core-layer body comprises in at least one holding section different from the at least one shrinkage section a plurality of grooves, wherein the grooves are arranged and configured from the second plate side of the core-layer body in a direction towards the first plate side such that the core-layer body is bendable in a second bending direction different from the first bending direction.

In particular, the core-layer body is plate-shaped and can be formed, for example into an ellipsoidal geometry, due to the grooves. Thus, the core-layer body can be used in a connecting member for connecting a first part of a wind turbine blade to a second part of a wind turbine blade, for example by arranging the core-layer body on an inner side of the first part of the wind turbine blade and on an inner side of the second part of the wind turbine blade. Preferably, the core-layer body may further have a sheet thickness of 1 to 10 cm, in particular 2.5 to 6.5 cm. Thus, a certain thickness can be produced by the core-layer body, whereby in particular a stability of a connecting element with such a core-layer body can be produced by reinforcing layers arranged on the core-layer body, for example a reinforcing layer with glass fibers.

The grooves may also be understood as recesses. In particular, the grooves are rectilinear grooves. Preferably, the respective grooves do not completely penetrate the core layer body, so that the core layer body is already held together by itself. For example, a plate-shaped wooden panel, e.g. a balsa wood panel, can be cut to create the grooves.

Further, in particular, the plurality of grooves in the at least one shrinkage section of the core layer body are parallel to each other and/or uniformly spaced. Also, the plurality of grooves in the at least one holding section of the core layer body may be parallel to each other and/or uniformly spaced. Thus, the core layer body can be fabricated in a particularly simple manner. Furthermore, in particular the grooves in the at least one shrinkage section of the core layer body extend from a first end face of the core layer body to a second end face of the core layer body opposite to the first end face and/or in particular the grooves in the at least one holding section of the core layer body extend from a first end face of the core layer body to a second end face of the core layer body opposite to the first end face.

The expression "*grooves are arranged and configured from a first plate side of the core-layer body in a direction towards a second plate side different from the first plate side*" and the expression "*grooves are arranged and configured from the second plate side of the core-layer body in a direction towards the first plate side*" are intended to express that the core-layer body has grooves on both sides of the core-layer body.

By having grooves on both sides of the core-layer body, the core-layer body, e.g. an ellipsoidal core-layer body, can be shrunk by bending the core-layer body in the at least one shrinkage section or by bending the core-layer body in a plurality of shrinkage sections. In other words, the core-layer body, e.g. an ellipsoidal core-layer body, can be reduced in size so as to be particularly easily inserted into a cavity of the first part of the wind turbine blade and into a cavity of the second part of the wind turbine blade for connecting the first part of the wind turbine blade to the second part of the wind turbine blade.

In particular, the core-layer body is configured by the at least one shrinkage section and the at least one holding section so that the size of a cavity enclosed by the core-layer body is variable.

It may be advantageous if a core-layer body according to the invention is formed in one piece. This means that the core-layer body can be produced particularly easily. In particular, the one-piece core-layer body comprises at least one shrinkage section and one holding section.

It may be advantageous if in a core-layer body according to the invention the at least one shrinkage section of the core-layer body is arranged in a materially cohesive manner, in particular adhesively, on the at least one holding section of the core-layer body. Thus, a base body with grooves on one side of the base body can be used for producing the core layer body with the at least one shrinkage section and the at least one holding section by arranging the base bodies with a respective end face against each other as required. Thus, the core-layer body can be particularly cost-effective. An adhesive arrangement can be done particularly easily.

It may be advantageous if in a core-layer body according to the invention the core-layer body has a plurality of shrinkage sections and/or a plurality of holding sections. By having the plurality of shrinkage sections, the core-layer body, e.g. an ellipsoidal core-layer body, can be particularly advantageously shrunk respectively reduced in size so as to be particularly easily inserted into a cavity of the first part of the wind turbine blade and into a cavity of the second part of the wind turbine blade for connecting the first part of the wind turbine blade to the second part of the wind turbine blade. In particular, a holding section is arranged between two shrinkage sections in each case. Furthermore, the shrinkage sections are advantageously arranged at specific positions. By having grooves at least section wise also on the inner side, i.e. first plate side, of the core-layer body, additional flexibility can be obtained at determinable positions.

It may be advantageous if in a core-layer body according to the invention in the at least one shrinkage section of the core-layer body on the second plate side of the core-layer body, at least in sections, a retaining layer, in particular a textile layer, is arranged for holding the core-layer body together in the at least one shrinkage section and/or that in the at least one holding section of the core-layer body on the first plate side of the core-layer body, at least in sections, a retaining layer, in particular a textile layer, is arranged for holding the core-layer body together in the at least one holding section. The retaining layer can be particularly advantageous in ensuring that the core-layer body holds together. For example, the retaining layer may be a textile layer and/or a glass-fiber layer, especially a glass-fiber tape. This makes it particularly easy to ensure that the core layer body is held together.

It may be advantageous if a core-layer body according to the invention has a density between 0.02 and 0.70 g/cm³, wherein in particular the core-layer body is made of balsa wood. Thus, the core-layer body can be particularly light in terms of weight. Balsa wood in particular is especially advantageous as a core layer body, since balsa wood has a particularly advantageous lightness, strong elasticity and stability.

It may be advantageous if in a core-layer body according to the invention a first groove direction of the plurality of grooves arranged in the at least one shrinkage section of the core-layer body is parallel or substantially parallel to a second groove direction of the plurality of grooves arranged in the at least one holding section of the core-layer body. Thus, the core-layer body with the grooves in the at least one shrinkage section and the at least one holding section can be produced particularly easily. Furthermore, the core-layer body can thus be brought for example into an ellipsoidal shape particularly easily due to the grooves. In particular, grooves in the at least one shrinkage section are arranged and configured from the first plate side of the core-layer body in a direction toward the second plate side such that the grooves in the at least one shrinkage section are running in the first groove direction, so that the core-layer body is bendable in the first bending direction. Furthermore, in particular, grooves in the at least one holding section are arranged and configured from the second plate side of the core-layer body in a direction toward the first plate side such that the grooves in the at least one holding section are running in the second groove direction, so that the core-layer body is bendable in the second bending direction.

According to a second aspect, the present invention shows a connecting member for connecting a first part of a wind turbine blade along an extension direction of the wind turbine blade to a second part of the wind turbine blade. The connecting member comprises a core-layer body having a first plate side and a second plate side, and wherein the core-layer body is configured according to the invention. Furthermore, the connecting member comprises a reinforcing layer of a fiber composite material arranged at least on the first plate side of the core-layer body and/or the connecting member comprises a reinforcing layer of a fiber composite material arranged at least on the second plate side of the core-layer body.

The connecting element according to the invention enables connecting respectively joining a first part of a wind turbine blade to a second part of the wind turbine blade along an extension direction of the wind turbine blade in a particularly simple and/or inexpensive manner.

The connecting member can also be understood as a joining element for joining a first part of a wind turbine blade along an extension direction of the wind turbine blade to a second part of the wind turbine blade.

In particular, the connecting member can be used to connect the first part to the second part of the wind turbine blade with a material bond. This makes it particularly easy to connect the first part to the second part of the wind turbine blade and also creates a particularly stable connection.

In a final state of the connecting member, i.e. when the connecting member connects the first part to the second part of the wind turbine blade, the connecting member may have an ellipsoidal shape, for example. In particular, the final state of the connecting member is reached when the matrix material is cured together with the fiber material of a reinforcing layer of the connecting member.

Furthermore, the reinforcing layer may comprise glass fibers and/or carbon fibers as fiber material. The term "*fiber material*" can also be understood to mean sheet-like fiber layers, which in particular can be bent. In addition, the matrix material in particular is a resin.

The connecting member according to the second aspect of the invention thus exhibits the same advantages as already described with respect to the core-layer body according to the first aspect of the invention.

According to a third aspect, the present invention discloses a wind turbine blade for a wind turbine, wherein the wind turbine blade comprises at least a first part of a wind turbine blade and a second part of the wind turbine blade. Furthermore, the wind turbine blade comprises at least one connecting member, wherein the connecting member is configured according to the invention, and wherein the connecting member is arranged on an inner side of the first part of the wind turbine blade in a cavity of the first part of the wind turbine blade and on an inner side of the second part of the wind turbine blade in a cavity of the second part of the wind turbine blade, to connect the first part of the wind turbine blade to the second part of the wind turbine blade along an extension direction of the wind turbine blade.

By connecting the first part of the wind turbine blade to the second part of the wind turbine blade by means of the connecting member according to the invention, the wind turbine blade can be designed to be particularly stable.

The extension direction of the wind turbine blade can also be understood as the longitudinal direction of the wind turbine blade.

The first part of the wind turbine blade (at least section wise) may have an ellipsoid shape and/or the second part of the wind turbine blade (at least section wise) may have an ellipsoidal shape. The wind turbine blade can also have more than two parts, wherein in particular two adjacent parts of the wind turbine blade are in each case connected to one another by a connecting element according to the invention. Through that the core-layer body of the connecting member can be reduced in size due to the at least one shrinkage section of the core-layer body, the core-layer body together with the fiber material of reinforcing layer(s) can be particularly easily inserted into the cavity of the first part of the wind turbine blade and into the cavity of the second part of the wind turbine blade for connecting the first part of the wind turbine blade to the second part of the wind turbine blade. After inserting the core-layer body together with the fiber material of the reinforcing layer(s), the inserted shrunken core-layer body together with the fiber material of the reinforcing layer(s) can be expanded by bending back the core-layer body at least in the at least one shrinkage section and a matrix material can be supplied to fiber material, to form the reinforcing layer(s). In this way the first part of the wind turbine blade can be connected respectively joined to the second part of the wind turbine blade.

The wind turbine blade according to the third aspect of the invention thus exhibits the same advantages as have already been described with respect to the core-layer body according to the first aspect of the invention and the connecting member according to the second aspect of the invention, respectively.

According to a fourth aspect, the present invention discloses a method of connecting a first part of a wind turbine blade along an extension direction of the wind turbine blade to a second part of the wind turbine blade, wherein the method comprises as a step that the first part of the wind turbine blade is provided and the second part of the wind turbine blade is provided. Furthermore, the method comprises as a step that a core-layer body is provided, wherein the core-layer body is configured according to the invention. Furthermore, the method comprises as a step that at least the provided core-layer body is shrunk by bending the core-layer body at least in the at least one shrinkage section in the first bending direction. Furthermore, the method comprises as a step that a fiber material is arranged to the first plate side of the provided core-layer body and/or a fiber material is arranged to the second plate side of the provided core-layer body. Furthermore, the method comprises as a step that the shrunk core-layer body with the fiber material arranged on the first plate side of the core-layer body and/or with the fiber material arranged on the second plate side of the core-layer body is inserted into a cavity of the first part of the wind turbine blade and into a cavity of the second part of the wind turbine blade. Furthermore, the method comprises as a step that the inserted shrunk core-layer body is expanded by bending back the core-layer body at least in the at least one shrinkage section. Furthermore, the method comprises as a step that a matrix material is supplied to the fiber material arranged on the first plate side of the core-layer body and/or to the fiber material arranged on the second plate side of the core-layer body. Furthermore, the method comprises as a step that the fiber material arranged on the first plate side of the core-layer body with the supplied matrix material to a reinforcing layer and/or the fiber material arranged on the second plate side of the core-layer body with the supplied matrix material is cured to a reinforcing layer, to connect the first part of the wind turbine blade to the second part of the wind turbine blade.

The process steps described before and, in the following, can be carried out, if technically reasonable, individually, together, singly, multiple, temporally parallel and/or successively in any order.

A preferred sequence of process steps provides that the core-layer body can be provided in an ellipsoidal shape. Subsequently, the fiber material can be arranged on the provided core layer body on the first plate side and/or on the second plate side. Subsequently, the core-layer body may be shrunk together with the fiber material, especially fiber layers, arranged on the core layered body by bending the core-layer body together with the fiber material, especially fiber layers, at least in the at least one shrinkage section in the first bending direction. After that, the shrunk core-layer body together with the fiber material is inserted, e.g. pushed, into the cavity of the first and the second part of the wind turbine blade. Subsequently, the inserted shrunk core-layer body together with the fiber material is expanded by bending back the core-layer body at least in the at least one shrinkage section and a matrix material can be supplied to fiber material, to form the reinforcing layer(s), when the matrix material has cured.

It may be advantageous if in a method according to the invention at least in sections a vacuum bag is arranged on the fiber material arranged on the first plate side of the provided core-layer body and/or at least in sections on the fiber material arranged on the second plate side of the provided core-layer body and a vacuum is generated in a space covered by the vacuum bag, to supply the matrix material to the fiber material arranged on the first plate side of the core-layer body and to the fiber material arranged on the second plate side of the core-layer body. Thus, the matrix material can be added to the fiber material in a particularly simple way to form the reinforcing layer of the connecting member. This process can also be understood as a vacuum infusion process.

It may be advantageous if in a method according to the invention the core-layer body with the at least one shrinkage section and the at least one holding section is provided in an ellipsoidal geometry, wherein in particular the provided core-layer body is shrunk by bending the core-layer body in the at least one shrinkage section toward or substantially toward a center of the ellipsoidal core-layer body. Thus, the fiber material can be arranged particularly easily to the first plate side and/or the second plate side of the core-layer body. In particular, the core-layer body can have (temporary) locally an S-shape due to bending the core-layer body in the at least one shrinkage section toward or substantially toward a center of the ellipsoidal core-layer body.

It may be advantageous if in a method according to the invention the core-layer body comprises a plurality of shrinkage sections, wherein by bending the core-layer body in the plurality of shrinkage sections, respectively, the core-layer body provided is shrunk. By having a plurality of shrinkage sections, the core-layer body, e.g. an ellipsoidal core-layer body, can be reduced particularly advantageously in size so as to be easily inserted into a cavity of the first part of the wind turbine blade and into a cavity of the second part of the wind turbine blade for connecting the first part of the wind turbine blade to the second part of the wind turbine blade. For example, the core-layer body has at least two or at least three shrinkage sections, with a holding section being arranged between each two shrinkage section.

The method according to the fourth aspect of the invention thus exhibits the same advantages as have already been described with respect to the core-layer body according to the first aspect of the invention or the connecting member according to the second aspect of the invention or the wind turbine blade according to the third aspect of the invention.

Further measures improving the invention result from the following description of some examples of implementation of the invention, which are shown schematically in the figures. All features and/or advantages arising from the claims, the description or the drawings, including constructional details, spatial arrangements and process steps, may be essential to the invention both individually and in the various combinations. It should be noted that the figures are only descriptive and are not intended to limit the invention in any way.

They show schematically:
Fig. 1 a shrunk core-layer body,
Fig. 2 an expanded core-layer body,
Fig. 3 a core-layer body,
Fig. 4 a connecting member,
Fig. 5 a wind turbine blade, and
Fig. 6 a method.

In the following figures, identical reference signs are used for the same technical features, even from different design examples.

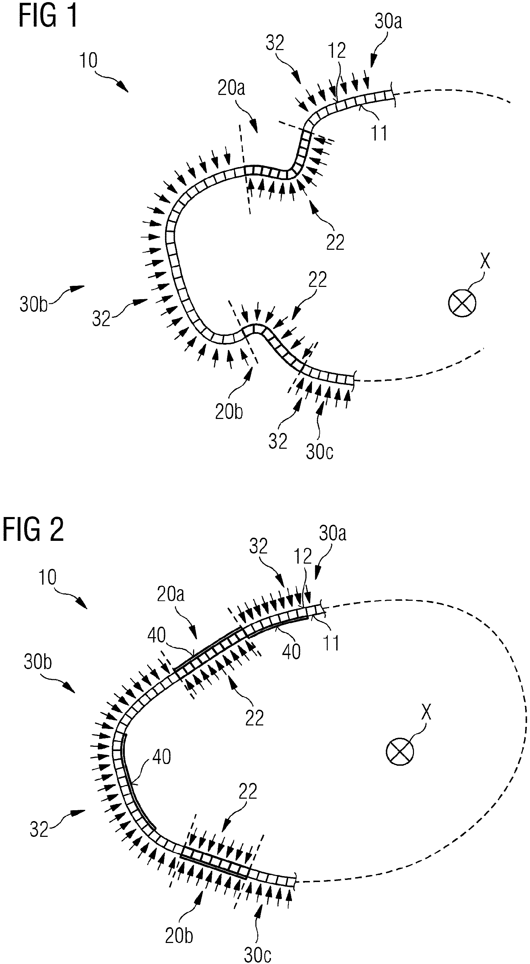

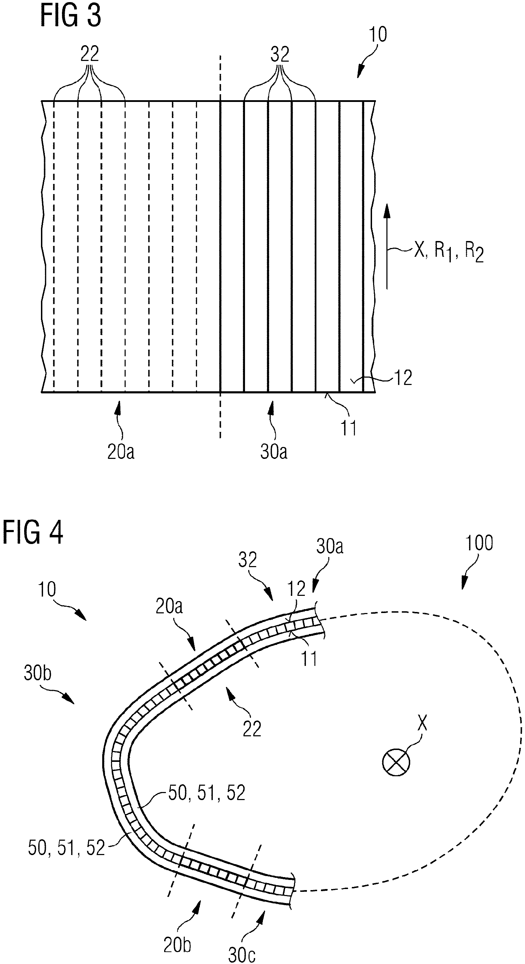

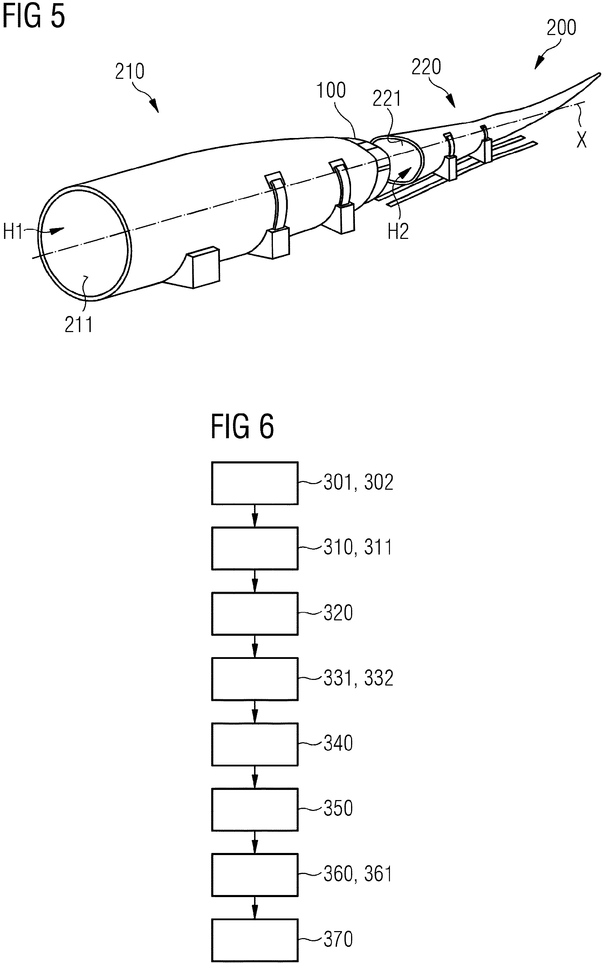

Fig. 1 shows in a section view a part of a shrunk core-layer body 10 for a connecting member 100 (see e.g. Fig. 4) for connecting a first part 210 of a wind turbine blade 200 along an extension direction X of the wind turbine blade 200 to a second part 220 of the wind turbine blade 200 (see e.g. Fig. 5). The core-layer body 10 comprises in at least one shrinkage section 20a of the core-layer body 10 a plurality of grooves 22, wherein the grooves 22 are arranged and configured from a first plate side 11 of the core-layer body 10 in a direction toward a second plate side 12 different from the first plate side 11 such that the core-layer body 10 is bendable in a first bending direction. Furthermore, the core-layer body 10 comprises in at least one holding section 30a, that is different from the at least one shrinkage section 20a, a plurality of grooves 32, wherein the grooves 32 are arranged and configured from the second plate side 12 of the core-layer body 10 in a direction towards the first plate side 11 such that the core-layer body 10 is bendable in a second bending direction different from the first bending direction. The multiple arrows at the first plate side 11 respectively the second plate side 12 indicate on which side of the core-layer body 10 the grooves 22, 23 are present. For example, a plate-shaped wooden panel, e.g. a balsa wood panel, can be cut to create the grooves 22, 23. As can be seen in Fig. 1, by having grooves 22, 23 on both sides of the core-layer body 10, the core-layer body 10, e.g. an ellipsoidal core-layer body 10, can be shrunk by bending the core-layer body in the at least one shrinkage section 20a or by bending the core-layer body 10 in a plurality of shrinkage sections 20a, 20b. In other words, by having grooves 22 at least section wise also on the inner side, i.e. first plate side 11, of the core-layer body 10 additional flexibility can be obtained at determinable positions. In particular the core-layer body 10 comprises in Fig. 1 at least a second shrinkage section 20b and two further holding section 30b, 30c.

Furthermore, in the case of the core-layer body 10 shown in Fig. 1, it can be provided that the core-layer body 10 is formed in one piece. Furthermore, in the case of the core-layer body 10 shown in Fig. 1, it can be provided alternatively that at least one shrinkage section 20a of the core-layer body 10 is arranged in a materially cohesive manner, in particular adhesively, on the at least one holding section 30a of the core-layer body 10.

Furthermore, in the case of the core-layer body 10 shown in Fig. 1, it can be provided that the core-layer body 10 has a density between 0.02 and 0.70 g/cm³, wherein in particular the core-layer body 10 is made of balsa wood.

Furthermore, in the case of the core-layer body 10 shown in Fig. 1, in the holding sections 30a, 30b, 30c of the core-layer body 10, the core-layer body 10 can be held from the inside, for example by a machine device (not shown), so that the core-layer body 10 can be shrunk in the shrinkage sections 20a, 20b.

Fig. 2 shows in a section view a part of an expanded core-layer body 10 for a connecting member 100 (see e.g. Fig. 4) for connecting a first part 210 of a wind turbine blade 200 along an extension direction X of the wind turbine blade 200 to a second part 220 of the wind turbine blade 200 (see e.g. Fig. 5) as it has already been described for Fig. 1.

In the case of the core-layer body 10 shown in Fig. 2, it is additionally provided that in at least one shrinkage section 20a of the core-layer body 10 on the second plate side 12 of the core-layer body 10, at least in sections, a retaining layer 40, in particular a textile layer, is arranged for holding the core-layer body 10 together in the at least one shrinkage section 20a and/or that in the at least one holding section 30a of the core-layer body 10 on the first plate side 11 of the core-layer body 10, at least in sections, a retaining layer 40, in particular a textile layer, is arranged for holding the core-layer body 10 together in the at least one holding section 30a.

Fig. 3 shows in a top view a part of a core-layer body 10 for a connecting member 100 (see e.g. Fig. 4) for connecting a first part 210 of a wind turbine blade 200 along an extension direction X of the wind turbine blade 200 to a second part 220 of the wind turbine blade 200 (see e.g. Fig. 5) as it has already been described for Fig. 1 and or Fig. 2. Furthermore, in the case of the core-layer body 10 shown in Fig. 3, it can be provided that a first groove direction R1 of the plurality of grooves 22 arranged in the at least one shrinkage section 20a of the core-layer body 10 is parallel or substantially parallel to a second groove direction R2 of the plurality of grooves 32 arranged in the at least one holding section 30a of the core-layer body 10. The dashed lines are to indicate that the grooves 22 of the shrinkage section 20a are formed on the lower side 11 of the core-layer body 10.

Fig. 4 shows in a section view a part of a connecting member 100 for connecting a first part 210 of a wind turbine blade 200 along an extension direction X of the wind turbine blade 200 to a second part 220 of the wind turbine blade 200(see e.g. Fig. 5). The connecting member 100 comprises at least one core-layer body 10 having a first plate side 11 and a second plate side 12, and wherein the core-layer body 10 is configured according to the invention, e.g. according to Fig. 1 and/or Fig. 2 and/or Fig. 3. The connecting member further comprises a reinforcing layer 50 of a fiber composite material arranged at least on the first plate side 11 of the core-layer body 10 and/or a reinforcing layer 50 of a fiber composite material arranged at least on the second plate side 12 of the core-layer body 10.

Fig. 5 shows in a perspective view a wind turbine blade 200 for a wind turbine. The wind turbine blade 200 comprises at least a first part 210 of a wind turbine blade 200 and a second part 220 of the wind turbine blade 200. Furthermore, the wind turbine blade 200 comprises at least one connecting member 100, wherein the connecting member 100 is configured according to the invention, e.g. according Fig. 4. Furthermore, the connecting member 100 is arranged on an inner side 211 of the first part 210 of the wind turbine blade 200 in a cavity H1 of the first part 210 of the wind turbine blade 200 and on an inner side 221 of the second part 220 of the wind turbine blade 200 in a cavity H2 of the second part 220 of the wind turbine blade 200, to connect the first part 210 of the wind turbine blade 200 to the second part 220 of the wind turbine blade 200 along an extension direction X of the wind turbine blade 200.

Fig. 6 shows a method of connecting a first part 210 of a wind turbine blade 200 along an extension direction X of the wind turbine blade 200 to a second part 220 of the wind turbine blade 200. The method comprises as a step that the first part 210 of the wind turbine blade 200 is provided 301 and as a step that the second part 220 of the wind turbine blade 200 is provided 302. Furthermore, the method comprises as a step that a core-layer body 10, wherein the core-layer body 10 is configured according to the invention, is provided 310. In particular, the core-layer body 10 with the at least one shrinkage section 20a and the at least one holding section 30a is provided 311 in an ellipsoidal geometry. Furthermore, the method comprises as a step that at least the provided core-layer body 10 is shrunk 320 by bending the core-layer body 10 at least in the at least one shrinkage section 20a in the first bending direction. Furthermore, the method comprises as a step that a fiber material 51 is arranged 331 to the first plate side 11 of the provided core-layer body 10 and/or a fiber material 51 is arranged 332 to the second plate side 12 of the provided core-layer body 10. Furthermore, the method comprises as a step that the shrunk core-layer body 10 with the fiber material 51 arranged on the first plate side 11 of the core-layer body 10 and/or with the fiber material 51 arranged on the second plate side 12 of the core-layer body 10 is inserted 340 into a cavity H1 of the first part 210 of the wind turbine blade 200 and into a cavity H2 of the second part 220 of the wind turbine blade 200. Furthermore, the method comprises as a step that the inserted shrunk core-layer body 10 is expanded 350 by bending back the core-layer body 10 at least in the at least one shrinkage section 20a. Furthermore, the method comprises as a step that a matrix material 10 is supplied 360 to the fiber material 51 arranged on the first plate side 11 of the core-layer body 10 and/or to the fiber material 51 arranged on the second plate side 12 of the core-layer body 10. In particular, at least in sections a vacuum bag is arranged on the fiber material 51 arranged on the first plate side 11 of the provided core-layer body 10 and/or at least in sections on the fiber material 51 arranged on the second plate side 12 of the provided core-layer body 10 and a vacuum is generated 361 in a space covered by the vacuum bag, to supply the matrix material 52 to the fiber material 51 arranged on the first plate side 11 of the core-layer body 10 and to the fiber material 51 arranged on the second plate side 12 of the core-layer body 10. Furthermore, the method comprises as a step that the fiber material 51 arranged on the first plate side 11 of the core-layer body 10 with the supplied matrix material 52 is cured 370 to a reinforcing layer 50 and/or the fiber material 51 arranged on the second plate side 12 of the core-layer body 10 with the supplied matrix material 52 is cured 370 to a reinforcing layer 50, to connect the first part 210 of the wind turbine blade 200 to the second part 220 of the wind turbine blade 200.

## Claims

1. A core-layer body (10) for a connecting member (100) for connecting a first part (210) of a wind turbine blade (200) along an extension direction (X) of the wind turbine blade (200) to a second part (220) of the wind turbine blade (200), wherein the core-layer body (10) comprises:
- in at least one shrinkage section (20a, 20b) of the core-layer body (10) a plurality of grooves (22), wherein the grooves (22) are arranged and configured from a first plate side (11) of the core-layer body (10) in a direction toward a second plate side (12) different from the first plate side (11) such that the core-layer body (10) is bendable in a first bending direction,
- in at least one holding section (30a, 30b, 30c) different from the at least one shrinkage section (20a, 20b) a plurality of grooves (32), wherein the grooves (32) are arranged and configured from the second plate side (12) of the core-layer body (10) in a direction towards the first plate side (11) such that the core-layer body (10) is bendable in a second bending direction different from the first bending direction.

2. Core-layer body (10) according to claim 1,
**characterized in that**,
the core-layer body (10) is formed in one piece.

3. Core-layer body (10) according to claim 1,
**characterized in that**,
the at least one shrinkage section (20a, 20b) of the core-layer body (10) is arranged in a materially cohesive manner, in particular adhesively, on the at least one holding section (30a, 30b, 30c) of the core-layer body (10).

4. Core-layer body (10) according to one of the preceding claims,
**characterized in that**,
the core-layer body (10) has a plurality of shrinkage sections (20a, 20b) and/or a plurality of holding sections (30a, 30b, 30c).

5. Core-layer body (10) according to any one of the preceding claims,
**characterized in that**,
in the at least one shrinkage section (20a, 20b) of the core-layer body (10) on the second plate side (12) of the core-layer body (10), at least in sections, a retaining layer (40), in particular a textile layer, is arranged for holding the core-layer body (10) together in the at least one shrinkage section (20a, 20b) and/or that in the at least one holding section (30a, 30b, 30c) of the core-layer body (10) on the first plate side (11) of the core-layer body (10), at least in sections, a retaining layer (40), in particular a textile layer, is arranged for holding the core-layer body (10) together in the at least one holding section (30a, 30b, 30c) .

6. Core-layer body (10) according to any one of the preceding claims,
**characterized in that**,
the core-layer body (10) has a density between 0.02 and 0.70 g/cm³, wherein in particular the core-layer body (10) is made of balsa wood.

7. Core-layer body (10) according to one of the preceding claims,
**characterized in that**,
a first groove direction (R1) of the plurality of grooves (22) arranged in the at least one shrinkage section (20a, 20b) of the core-layer body (10) is parallel or substantially parallel to a second groove direction (R2) of the plurality of grooves (32) arranged in the at least one holding section (30a, 30b, 30c) of the core-layer body (10).

8. A connecting member (100) for connecting a first part (210) of a wind turbine blade (200) along an extension direction (X) of the wind turbine blade (200) to a second part (220) of the wind turbine blade (200), wherein the connecting member (100) comprises:
- at least one core-layer body (10) having a first plate side (11) and a second plate side (12), and wherein the core-layer body (10) is configured according to any one of the preceding claims,
- a reinforcing layer (50) of a fiber composite material arranged at least on the first plate side (11) of the core-layer body (10)
and/or a reinforcing layer (50) of a fiber composite material arranged at least on the second plate side (12) of the core-layer body (10).

9. A wind turbine blade (200) for a wind turbine, wherein the wind turbine blade (200) comprises at least:
- a first part (210) of a wind turbine blade (200) and a second part (220) of the wind turbine blade (200),
- at least one connecting member (100), wherein the connecting member (100) is configured according to claim 8, and wherein the connecting member (100) is arranged on an inner side (211) of the first part (210) of the wind turbine blade (200) in a cavity (H1) of the first part (210) of the wind turbine blade (200) and on an inner side (221) of the second part (220) of the wind turbine blade (200) in a cavity (H2) of the second part (220) of the wind turbine blade (200), to connect the first part (210) of the wind turbine blade (200) to the second part (220) of the wind turbine blade (200) along an extension direction (X) of the wind turbine blade (200).

10. A method of connecting a first part (210) of a wind turbine blade (200) along an extension direction (X) of the wind turbine blade (200) to a second part (220) of the wind turbine blade (200), wherein the method comprises:
- providing (301) the first part (210) of the wind turbine blade (200) and providing (302) the second part (220) of the wind turbine blade (200),
- providing (310) a core-layer body (10), wherein the core-layer body (10) is configured according to any one of claims 1 to 7,
- shrinking (320) at least the provided core-layer body (10) by bending the core-layer body (10) at least in the at least one shrinkage section (20a, 20b) in the first bending direction,
- arranging (331) a fiber material (51) to the first plate side (11) of the provided core-layer body (10) and/or arranging (332) a fiber material (51) to the second plate side (12) of the provided core-layer body (10),
- inserting (340) the shrunk core-layer body (10) with the fiber material (51) arranged on the first plate side (11) of the core-layer body (10) and/or with the fiber material (51) arranged on the second plate side (12) of the core-layer body (10) into a cavity (H1) of the first part (210) of the wind turbine blade (200) and into a cavity (H2) of the second part (220) of the wind turbine blade (200),
- expanding (350) the inserted shrunk core-layer body (10) by bending back the core-layer body (10) at least in the at least one shrinkage section (20a, 20b),
- supplying (360) a matrix material (10) to the fiber material (51) arranged on the first plate side (11) of the core-layer body (10) and/or to the fiber material (51) arranged on the second plate side (12) of the core-layer body (10),
- curing (370) the fiber material (51) arranged on the first plate side (11) of the core-layer body (10) with the supplied matrix material (52) to a reinforcing layer (50) and/or the fiber material (51) arranged on the second plate side (12) of the core-layer body (10) with the supplied matrix material (52) to a reinforcing layer (50), to connect the first part (210) of the wind turbine blade (200) to the second part (220) of the wind turbine blade (200).

11. Method according to claim 10,
**characterized in that**,
at least in sections a vacuum bag is arranged on the fiber material (51) arranged on the first plate side (11) of the provided core-layer body (10) and/or at least in sections on the fiber material (51) arranged on the second plate side (12) of the provided core-layer body (10) and a vacuum is generated (361) in a space covered by the vacuum bag, to supply the matrix material (52) to the fiber material (51) arranged on the first plate side (11) of the core-layer body (10) and to the fiber material (51) arranged on the second plate side (12) of the core-layer body (10).

12. Method according to any one of claims 10 to 11,
**characterized in that**,
the core-layer body (10) with the at least one shrinkage section (20a, 20b) and the at least one holding section (30a, 30b, 30c) is provided (311) in an ellipsoidal geometry, wherein in particular the provided core-layer body (10) is shrunk (320) by bending the core-layer body (10) in the at least one shrinkage section (20a, 20b) toward or substantially toward a center of the ellipsoidal core-layer body (10).

13. Method according to any one of claims 10 to 12,
**characterized in that**,
the core-layer body (10) comprises a plurality of shrinkage sections (20a, 20b), wherein by bending the core-layer body (10) in the plurality of shrinkage sections (20a, 20b), respectively, the core-layer body (10) provided is shrunk (320) .
